# EUROPÄISCHE PATENTSCHRIFT

(11) **EP 3 356 741 B1**
(45) Veröffentlichungstag und Bekanntmachung des Hinweises auf die Patenterteilung: **23.03.2022**
(21) Anmeldenummer: 16819438.9
(22) Anmeldetag: 19.12.2016
(51) Int. Cl.: F24F 5/00, F24F 12/00, F28F 9/02, F28D 5/02, F28D 9/00, F28D 21/00

(54) **KLIMAGERÄT MIT EINEM LUFT/LUFT-PLATTENWÄRMEÜBERTRAGER**
AIR-CONDITIONING UNIT HAVING AN AIR/AIR PLATE-TYPE HEAT EXCHANGER
APPAREIL DE CLIMATISATION MUNI D'UN ÉCHANGEUR DE CHALEUR À PLAQUES AIR/AIR

(30) Priorität: 29.01.2016 DE 102016000913
(43) Veröffentlichungstag der Anmeldung: 08.08.2018
(73) Patentinhaber: Menerga GmbH, 45472 Mülheim an der Ruhr (DE)
(72) Erfinder: BERGER, Ralph, 45968 Gladbeck (DE)
(74) Vertreter: Cohausz Hannig Borkowski Wißgott
(86) Internationale Anmeldenummer: PCT/EP2016/002128
(87) Internationale Veröffentlichungsnummer: WO 2017/129211

(56) Entgegenhaltungen:
- EP-A1- 2 423 614
- EP-A2- 2 618 067
- EP-A2- 2 905 550
- WO-A1-2005/073656
- DE-A1-102009 048 543
- US-A1- 2002 040 575

## Beschreibung

Die Erfindung betrifft ein Verfahren zur indirekten adibaten Verdunstungskühlung und Taupunktkühlung in einem Luft/Luft-Wärmeübertrager umfassend ein Klimagerät mit mindestens einem Luft/Luft-Plattenwärmeübertrager (WT), der in einer Richtung von der Außenluft (AL) durchströmt ist, die nach Abkühlung im Luft/Luft-Plattenwärmeübertrager die Zuluft (ZL) zum Gebäudeinneren bildet, wobei der Luft/Luft-Plattenwärmeübertrager in der Quer- und/oder entgegengesetzten Richtung von der Abluft (ABL) des Gebäudes durchströmt ist, die einen Teil der Wärme der Außenluft (AL) übernimmt und zur Fortluft (FL) wird, wobei in die Abluft (ABL) insbesondere in den die Abluft führenden Plattenzwischenräume (Fortluftspalten) des Plattenwärmeübertragers (WT) Wasser gesprüht wird zur adiabaten Abkühlung der Abluft (ABL) zur Vergrößerung der Kühlleistung, und wobei vor Eintritt der Abluft (ABL) in den Wärmeübertragungsbereich zumindest ein Teil (AT) der Abluft (ABL) abgezweigt und in diejenigen von der Abluft durchströmten Plattenzwischenräume (Abluftspalten) des Wärmeübertragers (WT) eingeführt wird, die im Wärmeübertragungsbereich (B) liegen. Ein solches Klimagerät ist in der US 2002/040575 A1 beschrieben.

Raumlufttechnische(RLT)-Anlagen verbrauchen im sommerlichen Kühlbettrieb einen wesentlichen Anteil der global durch elektrisch oder thermisch angetriebene Kältemaschinen bereitgestellten Kälteenergie. Zur Reduzierung bzw. Substitution des Bedarfes an Kälteenergie sind Verfahren wie die "indirekte adiabate Verdunstungskühlung" oder die "Taupunktkühlung" bekannt und werden seit vielen Jahren in verschiedenen Varianten und Ausführungen angewendet.

Die beiden genannten Verfahren basieren auf dem natürlichen Vorgang der Verdunstung von Wasser, wobei die zum Phasenwechsel des Wassers von flüssig nach dampfförmig notwendige Wärmenergie der Umgebung, in diesem Fall dem befeuchteten Luftstrom, entzogen wird. Der befeuchtete Luftstrom kühlt sich durch diesen Verdunstungsprozess bis auf die Feuchtkugeltemperatur ab. Die Feuchtkugeltemperatur ist diejenige Temperatur, die bei Befeuchtung eines Luftstromes mit Wasser bei Erreichen der Sättigungslinie (relative Feuchte phi = 100%r.F.) ohne zusätzliche Wärmeaufnahme oder-abgabe aus der Umgebung des Luftstromes minimal erreicht wird. Eine höhere Lufttemperatur und/oder eine höhere Luftfeuchtigkeit führen zu einer höheren Feuchtkugeltemperatur. In einem Luft/Luft-Wärmeübertrager wird anschließend ein zweiter Luftstrom höherer Temperatur durch Wärmeübertragung an den befeuchteten Luftstrom gekühlt.

Bei der "indirekten adiabaten Verdunstungskühlung" wird der aus den klimatisierten Räumen abgeführte Abluftstrom vor oder bei dem Eintritt in das Wärmerückgewinnungssystem der RLT-Anlage mit Wasser befeuchtet, wodurch eine Temperaturabsenkung der Abluft entlang der Isenthalpen bis auf die AB-Feuchtkugeltemperatur möglich ist. Im Luft/Luft-Wärmeübertrager wird die den Räumen zugeführte Außenluft durch Wärmeabgabe an den befeuchteten Abluftstrom gekühlt. Das Verhältnis beider Luftmassenströme ist dabei in der Regel ausgeglichen, was die Nutzung des in den meisten Fällen für den Winterbetrieb der RLT-Anlage optimal dimensionierten Luft/Luft-Wärmeübertrager ermöglicht. Insbesondere bei Räumen mit hohen Wärme- und/oder Feuchtelasten reduziert sich die Kühlleistung der "indirekten adiabaten Verdunstungskühlung", da durch höhere Ablufttemperaturen und feuchten die AB-Feuchtkugeltemperatur gegenüber der dem Raum als Zuluft zugeführten ZU-Feuchtkugeltemperatur ansteigt.

Durch zusätzliches Befeuchten der abluftseitigen Wärmeübertragungsflächen bei Luft/Luft-Wärmeübertragern ohne Stoffübertragung (Plattenwärmeübertrager, Kreislauf-Verbundsysteme) kann die Kühlleistung der "indirekten adiabaten Verdunstungskühlung" zusätzlich gesteigert werden, da durch Nachverdunstung von Wasser in den Abluftstrom die durch Wärmeaufnahme aus der Außenluft bedingte Temperaturerhöhung des Abluftstromes verringert wird. Begrenzt wird in diesem Fall die mögliche Kühlleistung der Außenluft durch das Temperaturniveau der AB-Feuchtkugeltemperatur, eine tiefere Absenkung der Temperatur der Außenluft als die AB-Feuchtkugeltemperatur ist nicht möglich. Die bei ausgeglichenem Luftmassenströmen theoretisch durch kombinierte Wärmeaufnahme aus der Außenluft und Nachverdunstung von Wasser möglich Wärmeaufnahme des befeuchteten Abluftstromes ist bei Komfortklimaanwendungen um den Faktor 4 größer als die für die Abkühlung der Außenluft bis auf die theoretisch minimal mögliche Feuchtkugeltemperatur der Abluft notwendige Kühlleistung. Aufgrund dieses "Überschusses" an Kühlleistung können auch mit einfachen Kreuzstrom oder Kreuz-Gegenstrom-Plattenwärmeübertragern sehr gute Kühlleistungen erreicht werden.

Bei dem ebenfalls bekannten Verfahren der "Taupunktkühlung" wird ein Teil der im Luft/Luft-Wärmeübertrager gekühlten Außenluft vom Zuluftstrom abgezweigt und als befeuchteter Luftstrom im Luft/Luft-Wärmeübertrager zur Kühlung der Außenluft verwendet. Die minimal erreichbare Feuchtkugeltemperatur der Prozessluft ist dabei die Taupunkttemperatur der Außenluft. Im Vergleich zur Feuchtkugeltemperatur der Abluft ist die Taupunktemperatur der Außenluft deutlich niedriger, die Differenz beträgt je nach Außenluftzustand sowie der Wärme- und Feuchtelast in den klimatisierten Räumen zwischen 4 und 6 K. Dementsprechend tiefer sind die erreichbaren Außenlufttemperaturen nach der "Taupunktkühlung" im Vergleich zur "indirekten adiabaten Verdunstungskühlung". Die Abluft aus den klimatisierten Räumen wird bei dem Verfahren der "Taupunktkühlung" über einen Abluftventilator ungenutzt abgeführt oder über Überströmöffnungen von der über die RLT-Anlage eingeblasenen gekühlten Außenluft verdrängt.

Der aus dem gekühlten Außenluftstrom abgezweigte Anteil Prozessluft steht nicht als Zuluftstrom zur Klimatisierung der an die RLT-Anlage angeschlossenen Räume zur Verfügung. Der abgezweigte Prozessluftanteil beträgt in der Regel 33% vom gesamten gekühlten Außenluftstrom und muss als zusätzlicher Außenluftvolumenstrom von der RLT-Anlage über den Luft/Luft-Wärmeübertrager gefördert werden. Die theoretisch durch kombinierte Wärmeaufnahme aus der Außenluft und Nachverdunstung von Wasser möglich Wärmeaufnahme des befeuchteten Prozessluftstromes ist bei Komfortklimaanwendungen etwa gleich hoch wie die für die Abkühlung der Außenluft bis auf die theoretisch minimal mögliche Feuchtkugeltemperatur der Prozessluft notwendige Kühlleistung. Eine zusätzliche, hocheffiziente Befeuchtung der prozessluftseitigen Wärmeübertragungsflächen des Luft/Luft-Wärmeübertragers bei gleichzeitig sehr hohem Wirkungsgrad der Wärmeübertragung ist aus diesem Grund erforderlich.

Im Gegensatz zur "indirekten adiabaten Verdunstungskühlung" werden für das Verfahren der Taupunktkühlung nicht die optimal für den Winterbetrieb der RLT-Anlage dimensionierten Luft/Luft-Wärmeübertrager eingesetzt. Für die "Taupunktkühlung" kommen spezielle, sehr groß dimensionierte Luft/Luft-Wärmeübertrager zum Einsatz, die durch Gegenstromführung der beiden Luftströme höchste Temperaturwirkungsgrade ermöglichen und durch zusätzliche, auf der befeuchteten Prozessluftseite angeordnete Lamellen mit einer Spezialbeschichtung sehr hohe Verdunstungsraten ermöglichen.

Ziel der Erfindung ist die Kombination der beiden bekannten Verfahren "indirekte adibate Verdunstungskühlung" und "Taupunktkühlung" in einem Luft/Luft-Wärmeübertrager, der für den Einsatz im Winterbetrieb der RLT-Anlage optimal dimensioniert wurde.

Dabei ist es Aufgabe der Erfindung, ein Klimagerät der eingangs genannten Art so zu verbessern, dass der Wirkungsgrad weiter erhöht ist ohne hierfür zusätzlich Energie aufzuwenden.

Diese Aufgaben werden erfindungsgemäß durch ein Verfahren gemäß Anspruch 1 gelöst.

Erreicht wird somit dieses Ziel durch Konstruktion des Luft/Luft-Wärmeübertragers mit einem zusätzlichen (fünften) Anschlussstutzen für die Einspeisung des Abluftstromes mittig zwischen dem Prozesslufteintritt und dem Fortluftaustritt im Kühlbetrieb, wodurch der Bereich des befeuchten Luftstromes in zwei Sektoren unterteilt wird. Auf der Seite des Austritts der gekühlten Außenluft befindet sich im ersten Sektor die teilweise von der gekühlten Außenluft abgezweigte Prozessluft mit einer sehr niedrigen Feuchtkugeltemperatur. In diesem Sektor erfolgt die Kühlung der Außenluft nach dem Prinzip der "Taupunktkühlung", wobei die notwendige Kühlleistung durch die Vorkühlung der Außenluft im zweiten Sektor nur noch ca. 25% beträgt. Durch Wärmeaufnahme und Verdunstung erhöht sich die Feuchtkugeltemperatur der Prozessluft bis auf das Feuchtkugeltemperaturniveau der Abluft.

An diesem Punkt innerhalb des Luft/Luft-Wärmeübertragers wird nun die Abluft über den zusätzlichen (fünften) Anschlussstutzen eingespeist und mit dem Prozessluftstrom vermischt um im zweiten Sektor mit einem ausgeglichen Massenstromverhältnis die Vorkühlung der Außenluft im Luft/Luft-Wärmeübertrager auf das höhere Temperaturniveau der Feuchtkugeltemperatur der Abluft zu realisieren.

Bei einem solchen Klimagerät wird somit die abgezweigte Abluft insbesondere mittig in den Wärmeübertragungsbereich des Wärmetauschers geführt, so dass in der zweiten Hälfte des Wärmetauschers ein ausgeglichenes Massenstromverhältnis erzielt wird und damit die Kühlleistung erhöht wird, da eine größere Wassermenge zum Verdunsten in den Wärmetauscher gebracht wird. Und dies an einer Stelle, an der die Prozessluft bereits zur Kühlung genutzt wurde und ein weiteres Herunterkühlen möglich wird durch den höheren Massenstrom. Damit besteht sehr hoher Wirkungsgrad bei geringem Energieaufwand.

Wird die Kühlung der warmen Außenluft nur in Teillast betrieben, kann durch ein Klappensystem die Abluft komplett oder teilweise anstelle der Prozessluft in den Luft/Luft-Wärmeübertrager eingespeist werden. Durch die Reduktion bzw. den kompletten Entfall des Prozessluftstroms reduziert sich der benötigte Außenluftstrom im Teillastbetrieb der Kühlung der RLT-Anlage auf den zur Klimatisierung notwendigen Zuluftstrom, ein erhöhter Außenluftstrom ist nicht erforderlich.

Vorzugsweise wird vorgeschlagen, dass ein Teil der Zuluft hinter dem Wärmeübertragungsbereich vom Zuluftstrom abgezweigt und als Prozessluft zum Wärmeübertrager zurück geführt wird in die Plattenzwischenräume (Fortluftspalten) hinein, die von der Abluft durchströmt sind.

Damit wird ein Teil der gekühlten Zuluft als Prozessluft in den Wärmetauscher zurückgeführt auf einem zweiten Weg, um auf diesem zweiten Weg mit Wasser benetzt zu werden und hierdurch gekühlt zu werden, so dass die Außenluft weiter heruntergekühlt wird.

Vorzugsweise wird vorgeschlagen, dass der abgezweigte Teil der Abluft in den Wärmeübertragungsbereich an der Stelle des Abluftstroms in die Fortluftspalte eingespeist wird, an der die Feuchtkugeltemperatur der Prozessluft durch Wärme- und Feuchtigkeitsaufnahme die Feuchtkugeltemperatur der anfänglichen Abluft erreicht hat.

Auch ist von Vorteil, wenn die Abluft vor dem Einführen in den Wärmeübertrager mit einem Teil der gekühlten Zuluft gemischt wird.

Optimale Kühlergebnisse werden erreicht, wenn der in den Wärmeübertrager mittig eingeführte abgezweigte Teil der Abluft 40 bis 100 Prozent des Abluftstroms beträgt und wenn der als Prozessluft von der Zuluft abgezweigte Luftstrom 10 bis 50 Prozent des Zuluftstroms bzw. des Außenluftstroms beträgt.

Ein weiteres Herunterkühlen wird erreicht, wenn der abgezweigte Abluftstrom vor dem Wärmeübertrager und/oder innerhalb des Wärmeübertragers durch Wassereinsprühung befeuchtet wird. Hierzu wird auch vorgeschlagen, dass der Prozessluftstrom vor dem Wärmeübertrager und/oder innerhalb des Wärmeübertragers durch Wassereinsprühung befeuchtet wird.

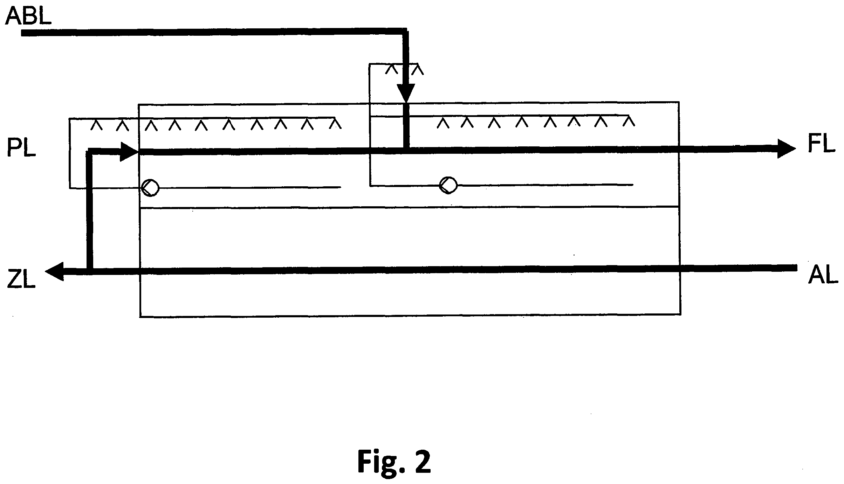

Vorzugsweise sind die beiden Wasserkreisläufe zur Befeuchtung des Prozessluftstromes und des Abluftstromes voneinander getrennt sind (Fig. 2).

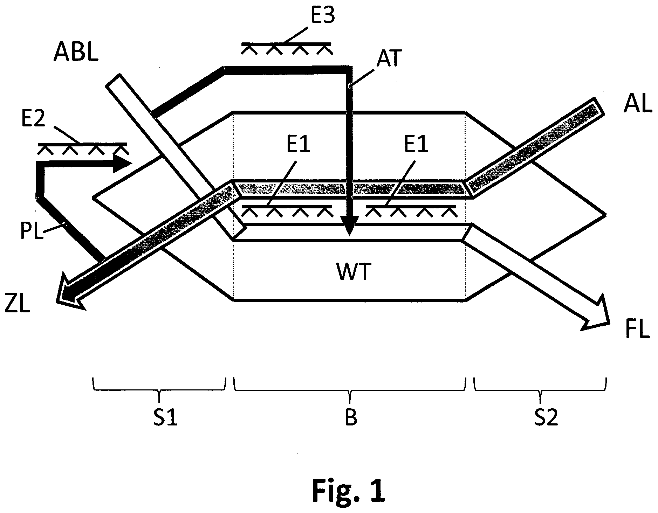

Ein Ausführungsbeispiel der Erfindung ist in den Zeichnungen schematisch dargestellt und wird im Folgenden näher beschrieben. Es zeigen
Fig. 1 eine Ansicht des Luft/Luft-Gegenstrom-Plattenwärmeübertragers und
Fig. 2 die Trennung der Wasserkreisläufe zur Befeuchtung des Prozessluftstromes und des Abluftstromes.

Das Klimagerät weist mindestens einen Luft/Luft-Gegenstrom-Plattenwärmeübertrager WT auf mit einer indirekten Wärmeübertragung, d.h. die beiden Luftströme sind räumlich durch wärmedurchlässige Wände getrennt, so dass es sich um einen Rekuperator handelt, der einen Teil der Wärme der Abluft auf die Zuluft überträgt. Hierbei sind die Luftströme in Gegenstrom geführt, wobei die Außenluft AL in Längsrichtung durch den Wärmeübertragungsbereich B geführt ist und durch ein nicht dargestelltes Gebläse in den Raum oder die Räume eines Gebäudes geblasen wird, um damit zur Zuluft ZL zu werden.

Die Abluft ABL wird durch ein nicht dargestelltes Gebläse aus dem Gebäude gesaugt und durch den Wärmeübertrager WT parallel zur Außenluft AL im Gegenstrom geführt. In den Zwischenräumen des Wärmeübertragers WT, durch die die Abluft ABL strömt, wird zwischen den im Wesentlichen senkrecht angeordneten Platten des Wärmeübertragers zur Kühlung der Platten und der Abluft ABL über Sprühdüsen eine Wassereinsprühung E1 Wasser eingesprüht, das unterhalb des Wärmeübertragungsbereichs B durch eine nicht dargestellte Wanne aufgefangen wird, soweit es nicht verdunstet ist. Von dieser Wanne wird das Wasser über eine Pumpe zu den Sprühdüsen der Wassereinsprühung E1 zurückgepumpt. Ein solches Klimagerät ist in der DE 10 2009 048 543.0 beschrieben.

Vor dem Wärmeübertragungsbereich B befindet sich ein erster Ein- und Ausströmsektor S1, in den die Platten des Wärmeübertragungsbereichs B hineinreichen und durch den die Abluft ABL einströmt und die Zuluft ZLausströmt. Auf der gegenüberliegenden Seite befindet sich ein zweiter Ein- und Ausströmsektor S2 mit der einströmenden frischen Außenluft AL und der ausströmenden Fortluft FL.

Von dem Luftstrom der Zuluft ZL ist ein Teil dieser Luft als Prozessluft PL abgezweigt und in den Abluftstrom hineingeführt vor dem Wärmeübertragungsbereich B. Auf dem Weg dieser Prozessluft wird diese, bevor sie die Abluft erreicht hat, durch eine Wassereinsprühung E2 gekühlt.

Von der Abluft ABL wird, bevor sie den Wärmeübertragungsbereich B erreicht hat, ein Teil AT abgezweigt, um in den mittleren Bereich des Wärmeübertragungsbereichs B in die Abluft ABL eingeführt zu werden. Auf dem Weg des abgezweigten Abluftteils AT wird diese auch durch Wassereinsprühung E3 gekühlt.

Der in den Wärmeübertrager mittig eingeführte abgezweigte Teil AT der Abluft beträgt 40 - 100 % des Abluftstroms. Der als Prozessluft PL von der Zuluft ZL abgezweigte Luftstrom beträgt 10 - 50 % des Zuluftstroms bzw. des Außenluftstroms.

Die beiden Wasserkreisläufe zur Befeuchtung des Prozessluftstromes und des Abluftstromes sind voneinander getrennt geführt, wie dies in Figur 2 dargestellt ist.

## Patentansprüche

1. Verfahren zur indirekten adibaten Verdunstungskühlung und Taupunktkühlung in einem Luft/Luft-Wärmeübertrager umfassend ein Klimagerät mit mindestens einem Luft/Luft-Plattenwärmeübertrager (WT), der in einer Richtung von der Außenluft (AL) durchströmt ist, die nach Abkühlung im Luft/Luft-Plattenwärmeübertrager die Zuluft (ZL) zum Gebäudeinneren bildet,
- wobei der Luft/Luft-Plattenwärmeübertrager in der Quer- und/oder entgegengesetzten Richtung von der Abluft (ABL) des Gebäudes durchströmt ist, die einen Teil der Wärme der Außenluft (AL) übernimmt und zur Fortluft (FL) wird,
- wobei in die Abluft (ABL) insbesondere in den die Abluft führenden Plattenzwischenräume (Fortluftspalten) des Plattenwärmeübertragers (WT) Wasser gesprüht wird zur adiabaten Abkühlung der Abluft (ABL) zur Vergrößerung der Kühlleistung, und
- wobei vor Eintritt der Abluft (ABL) in den Wärmeübertragungsbereich zumindest ein Teil (AT) der Abluft (ABL) abgezweigt und in diejenigen von der Abluft durchströmten Plattenzwischenräume (Abluftspalten) des Wärmeübertragers (WT) eingeführt wird, die im Wärmeübertragungsbereich (B) liegen,
**dadurch gekennzeichnet, dass** der abgezweigte Teil (AT) der Abluft (ABL) in den mittleren Bereich des Wärmeübertragungsbereichs (B) in die von der Abluft (ABL) durchströmten Plattenzwischenräume (Fortluftspalten) eingeführt wird.

2. Verfahren nach Anspruch 1, **dadurch gekennzeichnet, dass** ein Teil der Zuluft (ZL) hinter dem Wärmeübertragungsbereich (B) vom Zuluftstrom abgezweigt und als Prozessluft (PL) zum Wärmeübertrager (WT) zurück geführt wird in die Plattenzwischenräume hinein, die von der Abluft (ABL) durchströmt sind.

3. Verfahren nach Anspruch 2, **dadurch gekennzeichnet, dass** der abgezweigte Teil der Abluft (ABL) in den Wärmeübertragungsbereich (B) an der Stelle des Abluftstroms in die Fortluftspalte eingespeist wird, an der die Feuchtkugeltemperatur der Prozessluft (PL) durch Wärme- und Feuchtigkeitsaufnahme die Feuchtkugeltemperatur der anfänglichen Abluft (ABL) erreicht hat.

4. Verfahren nach einem der vorherigen Ansprüche, **dadurch gekennzeichnet, dass** die Abluft (ABL) vor dem Einführen in den Wärmeübertrager (WT) mit einem Teil der gekühlten Zuluft (ZL) gemischt wird.

5. Verfahren nach einem der vorherigen Ansprüche, **dadurch gekennzeichnet, dass** der in den Wärmeübertrager (WT) mittig eingeführte abgezweigte Teil (AT) der Abluft (ABL) 40 bis 100 Prozent des Abluftstroms beträgt.

6. Verfahren nach einem der Ansprüche 1 bis 4, **dadurch gekennzeichnet, dass** der als Prozessluft (PL) von der Zuluft (ZL) abgezweigte Luftstrom 10 bis 50 Prozent des Zuluftstroms bzw. des Außenluftstroms beträgt.

7. Verfahren nach einem der vorherigen Ansprüche, **dadurch gekennzeichnet, dass** der abgezweigte Abluftstrom (AT) vor dem Wärmeübertrager (WT) und/oder innerhalb des Wärmeübertragers durch Wassereinsprühung befeuchtet wird.

8. Verfahren nach einem der Ansprüche 2 bis 7, **dadurch gekennzeichnet, dass** der Prozessluftstrom vor dem Wärmeübertrager (WT) und/oder innerhalb des Wärmeübertragers durch Wassereinsprühung befeuchtet wird.

9. Verfahren nach einem der Ansprüche 2 bis 8, **dadurch gekennzeichnet, dass** die beiden Wasserkreisläufe zur Befeuchtung des Prozessluftstromes und des Abluftstromes voneinander getrennt sind.

## Claims

1. Method for indirect adiabatic evaporative cooling and dew point cooling in an air/air heat exchanger comprising an air conditioning unit with at least one air/air plate heat exchanger (WT) with outside air (AL) flowing through it in one direction, forming the supply air (ZL) for the interior of the building after cooling in the air/air plate heat exchanger,
- in which the exhaust air (ABL) from the building flows through the air/air plate heat exchanger in the transverse and/or opposite direction, absorbing some of the heat from the outside air (AL) and becoming outgoing air (FL),
- in which water is sprayed into the exhaust air (ABL), notably into the spaces between the plates (outgoing air gaps) of the plate heat exchanger (WT) that conduct the exhaust air, for adiabatic cooling of the exhaust air (ABL) in order to increase the cooling capacity, and
- in which at least a portion (AT) of the exhaust air (ABL) is branched off before the entry of the exhaust air (ABL) into the heat exchange zone, and is conducted into those spaces between the plates (exhaust air gaps) of the heat exchanger (WT) that lie in the heat exchange zone (B),
**characterised by** the branched part (AT) of the exhaust air (ABL) flowing into the centre area of the heat exchange zone (B), into the spaces between the plates (outgoing air gaps) through which the exhaust air (ABL) flows.

2. Method according to claim 1, **characterised by** part of the supply air (ZL) branching off the supply air flow behind the heat exchange zone (B) and being conducted back to the heat exchanger (WT) as process air (PL) into the spaces between the plates through which the exhaust air (ABL) flows.

3. Method according to claim 2, **characterised by** the branched part of the exhaust air (ABL) being fed into the heat exchange zone (B) at the location of the exhaust air flow in the outgoing air gap where the wet-bulb temperature of the process air (PL) has reached the wet-bulb temperature of the original exhaust air (ABL) through heat and moisture absorption.

4. Method according to one of the preceding claims, **characterised by** the exhaust air (ABL) being mixed with part of the cooled supply air (ZL) before it is introduced into the heat exchanger (WT).

5. Method according to one of the preceding claims, **characterised by** the branched part (AT) of the exhaust air (ABL) fed into the middle of the heat exchanger (WT) constituting 40 to 100 per cent of the exhaust air flow.

6. Method according to one of the claims 1 through 4, **characterised by** the air flow branched off the supply air (ZL) as process air (PL) constituting 10 to 50 per cent of the supply air flow or the outside air flow.

7. Method according to one of the preceding claims, **characterised by** the branched exhaust air flow (AT) being humidified with sprayed water before the heat exchanger (WT) and/or inside the heat exchanger.

8. Method according to one of the claims 2 through 7, **characterised by** the process air flow being humidified with sprayed water before the heat exchanger (WT) and/or inside the heat exchanger.

9. Method according to one of the claims 2 through 8, **characterised by** the two water circuits for humidifying the process air flow and the exhaust air flow being separate from each other.

## Revendications

1. Procédé de refroidissement adiabatique indirect par évaporation et de refroidissement par point de rosée dans un échangeur thermique air/air comprenant un appareil de climatisation avec au moins un échangeur thermique à plaques air/air (WT) traversé dans une direction par l'air extérieur (AL) lequel forme, après refroidissement dans l'échangeur thermique à plaques air/air, l'air entrant (ZL) à l'intérieur d'un bâtiment,
- sachant que l'échangeur thermique à plaques air/air est traversé dans la direction transversale et/ou opposée par l'air sortant (ABL) du bâtiment, lequel reprend une partie de la chaleur de l'air extérieur (AL) et devient de l'air évacué (FL),
- sachant que pour son refroidissement adiabatique afin d'augmenter la puissance de refroidissement, de l'eau est pulvérisée dans l'air sortant (ABL), plus particulièrement dans les espaces interplaques conduisant l'air sortant (fentes d'air évacué) de l'échangeur thermique à plaques (WT), et
- sachant qu'avant l'entrée de l'air sortant (ABL) dans la zone de transfert de chaleur, au moins une partie (AT) de l'air sortant (ABL) est détournée et envoyé dans les espaces interplaques situés dans la zone de transfert de chaleur (B) et traversés par l'air sortant (fentes d'air sortant) de l'échangeur thermique (WT),
**caractérisé en ce que** la partie détournée (AT) de l'air sortant (ABL) est envoyée au milieu de la zone de transfert de chaleur (B) dans les espaces interplaques(fentes d'air évacué) traversés par l'air sortant (ABL).

2. Procédé selon la revendication 1, **caractérisé en ce qu'**une partie de l'air entrant (ZL) est détournée de son flux derrière la zone de transfert de chaleur (B) et retournée en tant qu'air de processus (PL) de l'échangeur thermique (WT) dans les espaces interplaques traversés par l'air sortant (ABL).

3. Procédé selon la revendication 2, **caractérisé en ce que,** dans la zone de transfert de chaleur (B), la partie détournée de l'air sortant (ABL) est accumulée à la place du flux d'air sortant dans la fente d'air évacué, où la température de bulbe humide de l'air de processus (PL) a atteint, par absorption de chaleur et d'humidité, la température de bulbe humide de l'air évacué initial (ABL).

4. Procédé selon l'une des revendications précédentes, **caractérisé en ce que** l'air sortant (ABL) est mélangé à une partie de l'air entrant refroidi (ZL) avant d'entrer dans l'échangeur thermique (WT).

5. Procédé selon l'une des revendications précédentes, **caractérisé en ce que** la part d'air détournée (AT) de l'air sortant (ABL) envoyée au milieu dans l'échangeur thermique (WT) représente 40 à 100 pourcents du flux d'air sortant.

6. Procédé selon l'une des revendications 1 à 4, **caractérisé en ce que** le flux d'air détournée en tant qu'air de processus (PL) de l'air entrant (ZL) représente 10 à 50 pourcents du flux d'air entrant ou du flux d'air extérieur.

7. Procédé selon l'une des revendications précédentes, **caractérisé en ce que** le flux d'air sortant détourné (AT) est humidifié par pulvérisation d'eau avant l'échangeur thermique (WT) et/ou à l'intérieur de l'échangeur thermique.

8. Procédé selon l'une des revendications 2 à 7, **caractérisé en ce que** le flux d'air de processus est humidifié par pulvérisation d'eau avant l'échangeur thermique (WT) et/ou à l'intérieur de l'échangeur thermique.

9. Procédé selon l'une des revendications 2 à 8, **caractérisé en ce que** les deux circuits d'eau d'humidification du flux d'air de processus et du flux d'air sortant sont séparés.
